(19) Europäisches Patentamt
European Patent Office
Office européen des brevets

(11) **EP 1 498 391 B1**

(12) **EUROPÄISCHE PATENTSCHRIFT**

(45) Veröffentlichungstag und Bekanntmachung des Hinweises auf die Patenterteilung:
**05.05.2010  Patentblatt 2010/18**

(51) Int Cl.:
*C01G 33/00* (2006.01)     *H01B 3/02* (2006.01)
*C04B 35/495* (2006.01)

(21) Anmeldenummer: **04015657.2**

(22) Anmeldetag: **02.07.2004**

(54) **Niobsuboxidpulver**

Niobium suboxide

sous-oxyde de niobium

(84) Benannte Vertragsstaaten:
**CZ DE GB PT**

(30) Priorität: **15.07.2003   DE 10331891**

(43) Veröffentlichungstag der Anmeldung:
**19.01.2005   Patentblatt 2005/03**

(73) Patentinhaber: **H.C. Starck GmbH
38642 Goslar (DE)**

(72) Erfinder:
• **Thomas, Oliver
  38667 Bad Harzburg (DE)**
• **Schnitter, Christoph, Dr.
  31188 Holle (DE)**

(56) Entgegenhaltungen:
**US-A1- 2002 064 476**

**Beschreibung**

Die Erfindung betrifft ein Niobsuboxidpulver, das für die Herstellung von Kondensatoren mit einer Isolatorschicht aus Niobpentoxid geeignet ist, aus dem Niobsuboxidpulver hergestellte Kondensatoranoden, sowie entsprechende Kondensatoren.

Als Festelektrolytkondensatoren mit sehr großer aktiver Kondensatorfläche und daher kleiner, für die mobile Kommunikationselektronik geeigneter Bauweise werden überwiegend solche, mit einer auf einem entsprechenden leitfähigen Träger aufgebrachten Niob- bzw. Tantalpentoxidsperrschicht eingesetzt unter Nutzung von deren Stabilität ("Ventilmetall"), der vergleichsweise hohen Dielektrizitätskonstanten und der über die elektrochemische Erzeugung mit sehr gleichmäßiger Schichtdicke herstellbaren isolierenden Pentoxidschicht. Als Träger werden metallische oder leitfähige niedere oxidische (Suboxide) Vorläufer der entsprechenden Pentoxide eingesetzt. Der Träger, der zugleich die eine Kondensatorelektrode (Anode) darstellt, besteht aus einer hochporösen, schwammartigen Struktur, die durch Versintern feinstteiliger Primärstrukturen bzw. bereits schwammartiger Sekundärstrukturen hergestellt wird. Die Oberfläche der Trägerstruktur wird elektrolytisch zum Pentoxid oxidiert ("formiert"), wobei die Dicke der Pentoxidschicht durch die Maximalspannung der elektrolytischen Oxidation ("Formierspannung") bestimmt wird. Die Gegenelektrode wird durch Tränken der schwammartigen Struktur mit Mangannitrat, das thermisch zu Mangandioxid umgesetzt wird oder mit einem flüssigen Vorläufer eines Polymerelektrolyten und Polymerisation erzeugt. Die elektrischen Kontakte zu den Elektroden werden auf der einen Seite durch einen bei der Erzeugung der Trägerstruktur eingesinterten Tantal- oder Niobdraht und auf der anderen Seite durch die gegen den Draht isolierte metallische Kondensatorhülle dargestellt.

Die Kapazität C eines Kondensators berechnet sich nach folgender Formel:

$$C = (F \cdot \varepsilon) / (d \cdot V_F)$$

wobei F die Kondensatoroberfläche, $\varepsilon$ die Dielektrizitätskonstante, d die Dicke der Isolatorschicht pro V Formierspannung und $V_F$ die Formierspannung bezeichnet. Da die Dielektrizitätskonstante $\varepsilon$ für Tantalpentoxid bzw. Niobpentoxid 27,6 bzw. 41 beträgt, das Dickenwachstum der Schicht pro Volt Formierspannung d aber 16,6 bzw. 25 Å/V beträgt, weisen beide Pentoxide denselben Quotienten $\varepsilon/d$ = 1,64 bzw. 1,69 auf. Kondensatoren auf Basis beider Pentoxide mit gleicher Geometrie der Anodenstrukturen weisen also dieselbe Kapazität auf. Unterschiede bei Angaben von auf das Gewicht bezogenen spezifischen Kapazitäten ergeben sich trivialerweise aus den unterschiedlichen Dichten von Nb, $NbO_x$ und Ta.

Anodenstrukturen aus Nb und $NbO_x$ weisen daher den Vorteil der Gewichtsersparnis bei Anwendung beispielsweise in Mobiltelefonen, bei denen um jedes Gramm Gewichtsersparnis gerungen wird, auf. Unter Kostengesichtspunkten ist $NbO_x$ günstiger als Nb, da ein Teil des Volumens der Anodenstruktur durch Sauerstoff bereitestellt wird.

Aus EP 1 388 870 A1 sind bereits Kondensatoren bekannt, die eine Elektrode enthalten, die durch Sintern eines Niobsuboxidpulvers der Formel $NbO_x$ (x = 0,8 bis 1,2) hergestellt wird. Das in EP 1 388 870 A1 beschriebene Niobsuboxidpulver zeichnet sich insbesondere durch eine Klopfdichte von 0,5 bis 2,5 g/ml und der daraus hergestellte Sinterkörper durch eine spezielle Porosität aus. Das Niobsuboxidpulver kann eine Vielzahl von anderen Elementen, z.B. Mg, Ca, Sr, Ba, Sc, Y, La, Ce, Pr, Ti, Zr, Hf, V, Ta, Mo, W, Mn, Re, Ru, Os, Rh, Ir, Pd, Al, C, Si und viele andere enthalten, wobei diese Elemente in einer Menge von 50 bis 200 000 ppm, d.h. bis zu 20 Gew.-% zugegen sein können. Es ist EP 1 388 870 A1 nicht zu entnehmen, ob die Anwesenheit bestimmter Elemente der genannten Gruppe besondere Vorteile hat und in welcher Menge spezielle Elemente vorhanden sein sollen.

Ein wesentliches Qualitätsmerkmal von Kondensatoren ist der Leckstrom, d.h. die Reststromdurchlässigkeit der Pentoxidsperrschicht, die möglichst gering sein soll, um Verluste zu vermeiden. Negative Einflüsse auf den Reststrom haben insbesondere Verunreinigungen wie Fe, Cr, Ni, Alkalimetalle, Halogene, Kohlenstoff und andere. Offenbar können diese Verunreinigungen bei Kondensatoren auf Basis Niobsuboxid auch in geringster Konzentration noch schädlich im Hinblick auf den Reststrom sein. Bei der Herstellung von Niobsuboxid mittels des üblichen metallurgischen Verfahrens, bei dem hochoxidiertes Niob ($Nb_2O_5$) mit metallischem Niob bei erhöhter Temperatur in nicht-oxidierender, vorzugsweise reduzierender Atmosphäre unter Ausgleich der Sauerstoffkonzentration behandelt wird, sammeln sich offenbar bei der Diffusion des Sauerstoffs in die ursprünglich metallischen Teilchen die metallischen Verunreinigungen mit kleinerem Atomradius an der Teilchenoberflächenschicht an, da sie bei der erforderlichen Platzwechselreaktion schneller sind, als die Niobatome. Sie stehen dann nach Formierung der Anodenstruktur insbesondere in der Sperrschicht als Störstellen zur Verfügung. Die Verunreinigungswanderung an die Oberfläche erfolgt zudem nicht symmetrisch, sondern ungleichmäßig, beispielsweise je nachdem ob das zufällige Nachbarteilchen bei dem Sauerstoffaustausch ein sauerstoffabgebendes oder ein sauerstoffaufnehmendes Teilchen ist. Dadurch sind Schwankungen der Verunreinigungskonzentrationen bedingt, die mit erhöhten Spitzenwerten des Reststroms einhergehen.

Aufgabe der vorliegenden Erfindung ist es, den Reststrom von Kondensatoren auf Basis von Niobsuboxidanoden zu reduzieren.

Aufgabe der Erfindung ist es ferner, Reststromschwankungen aufgrund der Herstellung von Kondensatoren innerhalb eines Batches zu reduzieren.

Aufgabe der Erfindung ist es weiterhin, ein für die Kondensatorherstellung hinsichtlich Primär und Sekundärstruktur vorteilhaftes Niobsuboxidpulver zur Verfügung zu stellen.

Es wurde gefunden, dass durch Dotierung von Niobsuboxid mit Magnesium, Wolfram und/oder Molybdän der Reststrom von daraus hergestellten Kondensatoren günstig im Sinne der oben genannten Eigenschaften beeinflusst wird. Offenbar stellen die in das Gitter eingebauten Dotierelemente Fallen ("traps") für störende Verunreinigungen dar, d.h. in der Umgebung der Dotierelemente, die Störungen der Gitterstruktur des Nioboxides darstellen, können die Verunreinigungen in einer Weise gebunden werden, dass sie hinsichtlich ihres Einflusses auf den Reststrom neutralisiert werden, beispielsweise nach der oben dargestellten Vorstellung sich nicht an der Teilchenoberfläche anreichern.

Gegenstand der Erfindung sind Niobsuboxidpulver enthaltend 100 bis 600 ppm Magnesium und/oder 50 bis 400 ppm Molybdän und /oder Wolfram. Bevorzugt sind Niobsuboxidpulver, die sowohl 100 bis 600 ppm Magnesium als auch 50 bis 400 ppm Molybdän und/oder Wolfram enthalten.

Besonders bevorzugt liegt der Magnesiumgehalt zwischen 150 und 400 ppm und der Molybdänund/oder Wolframgehalt zwischen 60 und 250 ppm. Molybdän ist gegenüber Wolfram bevorzugt, insbesondere gemeinsam mit Magnesium.

Geeignete Niobsuboxide sind solche der Formel $NbO_x$, wobei x zwischen 0,7 und 1,3 liegt, entsprechend einem Sauerstoffgehalt zwischen 10,8 bis 18,3 Gew.-%; bevorzugt liegt x zwischen 1 und 1,033, entsprechend einem Sauerstoffgehalt von 14,7 bis 15,1 Gew.-%. Ein geringfügig oberhalb der stöchiometrischen Zusammensetzung von x=1 liegender Sauerstoffgehalt ist besonders bevorzugt.

Die Gehalte an weiteren Verunreinigungen mit Ausnahme üblicher Dotiermittel wie Stickstoff und Phosphor sollen so niedrig wie möglich sein. Unschädlich sind Gehalte bzw. Legierungsbestandteile an Tantal, soweit diese Niob entsprechend der Formel $(Nb,Ta)O_x$ ersetzen. Besonders bevorzugte Niobsuboxidpulver weisen Gehalte an Fe, Cr, Ni, Cu, Alkalimetallen, sowie Fluorid und Chlorid von jeweils weniger als 15 ppm auf. Dabei ist weiter bevorzugt, dass die Summe der Gehalte weniger als 35 ppm beträgt. Der Gehalt an Kohlenstoff der erfindungsgemäßen Niobsuboxidpulver soll bevorzugt unterhalb von 40 ppm liegen.

Vorteilhaft ist ein Gehalt an Stickstoff von 10 bis 500 ppm.

Phosphorgehalte in den erfindungsgemäßen Niobsuboxidpulvern sind im allgemeinen nicht schädlich. In Niob- und Tantalmetallpulvern wird Phosphor zur Herabsetzung der Sinteraktivität während der Erzeugung der Sekundärstrukturen und der Anodenstruktur eingesetzt. Bei den erfindungsgemäßen Pulvern ist eine Herabsetzung der Sinteraktivität in den meisten Fällen jedoch eher unerwünscht. Bevorzugt sind erfindungsgemäß Phosphorgehalte von unter 10 ppm. Gegebenenfalls kann vor der Sinterung zur Anodenstruktur eine Behandlung der Pulver mit Phosphorsäure, Ammoniumhydrogenphosphat oder Ammoniumphosphat erfolgen.

Weitere, allerdings weniger kritische Verunreinigungen an Al, B, Ca, Mn und Ti liegen vorzugsweise unter 10 ppm, Si unterhalb 20 ppm.

Die erfindungsgemäßen Niobsuboxidpulver bestehen vorzugsweise aus agglomerierten Primärteilchen mit einer mittleren Querschnittsabmessung von 0,3 bis 1,5 $\mu$m, besonders bevorzugt zwischen 0,4 und 1 $\mu$m. Die Primärteilchen können in Kugel-, Plättchen-, Faden- oder in anderer Form vorliegen. Wesentlich ist, dass die geringste Querschnittabmessung (bei Abweichung von der Kugelform) im Bereich zwischen 0,3 und 1,5 $\mu$m liegt.

Die Primärteilchenagglomerate weisen vorzugsweise eine nach ASTM B 822 ("Mastersizer"; Benetzungsmittel Daxad 11) bestimmte Partikelgrößenverteilung auf, die durch einen D10-Wert von 50 bis 100 $\mu$m, einen D50-Wert von 150 bis 200 $\mu$m und einen D90-Wert von 250 bis 350 $\mu$m definiert ist. Die schwammartigen Agglomerate weisen einen runden bis ovalen Querschnitt auf und haben ein gutes Fließvermögen (nach Hall, ASTM B 213) von weniger als 60 sec/25 g. Das Schüttgewicht (nach Scott, ASTM B 329) liegt zwischen 0,9 und 1,2 $g/cm^3$ (14,8 bis 19,7 $g/inch^3$). Die spezifische Oberfläche (BET, ASTM D 3663) liegt zwischen 0,85 und 2,5 $m^2/g$, besonders bevorzugt zwischen 1 und 1,5 $m^2/g$.

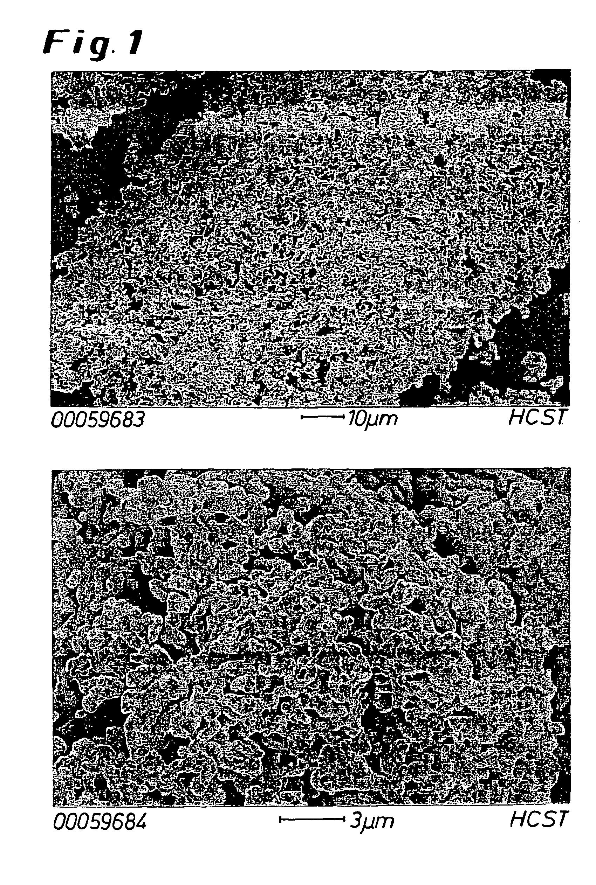

Fig.1 zeigt eine SEM-Aufnahme eines derartigen bevorzugten Pulvers, das aus agglomerierten kugelförmigen Primärteilchen besteht.

Die hervorragende Press- und Sinterfähigkeit der bevorzugten Niobsuboxidpulver ergibt sich auch aus der Stabilität der Sinterbrücken, die über die Temperatur während der Agglomerierung einstellbar ist. Ein Maß hierfür ist die Änderung der Partikelgrößenverteilung nach Behandlung der Agglomerate im Ultraschallbad. Nach 15-minütiger Behandlung der bevorzugten Agglomerate im Ultraschallbad stellt sich eine bimodale Partikelgrößenverteilung mit ausgeprägten Häufigkeitsmaxima zwischen 2 bis 10 $\mu$m (Nebenmaximum) einerseits und zwischen 90 und 200 $\mu$m (Hauptmaximum) andererseits ein. Der D10-Wert (Mastersizer, ASTM B 822) liegt zwischen 1,5 und 3,0 $\mu$m, der D50-Wert zwischen 20 und 60 $\mu$m und der D90-Wert zwischen 70 und 130 $\mu$m.

Die erfindungsgemäß bevorzugten Pulver weisen eine durch Quecksilberintrusion bestimmte Porosität von 50 bis 65 Vol.-%, besonders bevorzugt 53 bis 60 Vol.-% auf. Mehr als 90% des Porenvolumens wird durch Poren des Durchmessers zwischen 0,2 und 3 $\mu$m gebildet. Die breite, über dem Porendurchmesser aufgetragene Porenvolumenverteilungskurve weist steile Flanken auf, mit einem Minimum im Bereich des doppelten Primärteilchendurchmessers.

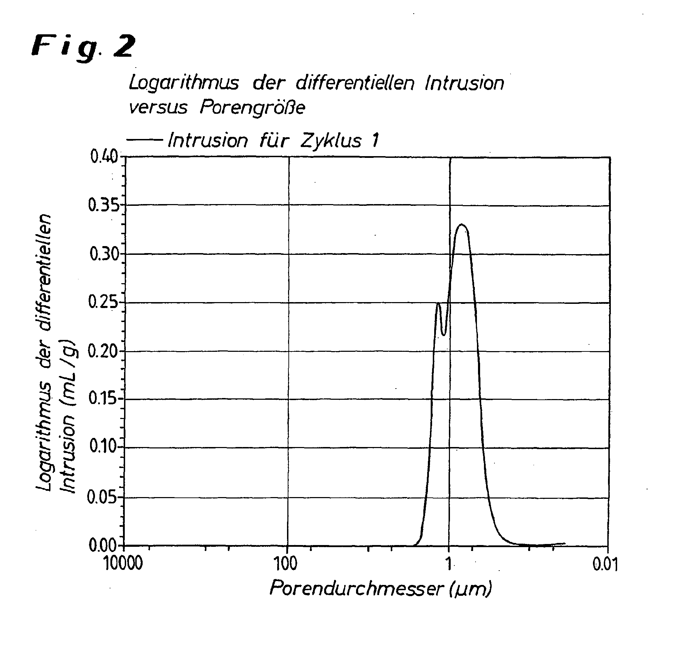

Fig. 2 zeigt eine derartige Porengrößenverteilungskurve des Pulvers gemäß Fig. 1 mit einem Porendefizit im Bereich von 1,1 bis 1,2 μm.

Mit den erfindungsgemäß bevorzugten Niobsuboxidpulvern, gelingt es, nach der üblichen Methode Kondensatoren mit einem Reststrom von weniger als 0,2 nA/μFV herzustellen. Es werden Restströme bis herab zu 0,03 nA/μFV realisiert.

Gegenstand der Erfindung sind demnach auch Kondensatoren mit einer Niobsuboxidanode und einer Niobpentoxidsperrschicht, die einen Reststrom von weniger als 0,2 nA/μFV aufweisen, wobei das Niobsuboxid mit Magnesium, Molybdän und/oder Wolfram dotiert ist. Bevorzugte Merkmale der erfindungsgemäßen Kondensatoren entsprechen den oben beschriebenen bevorzugten Merkmalen der Niobsuboxidpulver.

Erfindungsgemäße Kondensatoren weisen spezifische Kapazitäten von 50.000 bis 200.000 μFV/g, vorzugsweise 70.000 bis 150.000 μFV/g auf.

Die Herstellung der Kondensatoren kann wie folgt erfolgen:

Um einen in die Pressform eingelegten Niob- oder Tantaldraht wird das Pulver bis zu einer Pressdichte von 2,3 bis 3,5 g/cm³ zu Grünkörpern verpresst. Es werden Presskörper mit einer sehr günstigen Pressfestigkeit erhalten. Beispielsweise zeigt die standardisierte Messung an zylindrischen Presskörpern (ohne Draht) von 5,2 mm Durchmesser und 5,1 mm Höhe mit einer Einwaage von 301 mg Niobsuboxidpulver nach Pressung bis zu einer Dichte von 2,8 g/cm³ eine Stabilität gegen ein aufgelegtes Gewicht von 0,5 bis 1 kg.

Die den Kontaktdraht enthaltenden Presskörper werden anschließend vorzugsweise in einem Niob- oder Tantalschiffchen bei 1100 bis 1500°C über eine Sinterhaltezeit von 15 bis 25 Minuten, vorzugsweise ca. 20 Minuten, im Hochvakuum bei 10⁻⁸ bar gesintert. Die Sintertemperatur wird so gewählt, dass die später aus der Kapazität berechenbare Kondensatoroberfläche noch 65 bis 45 % der am Pulver gemessenen spezifischen Oberfläche beträgt. Die optimale Sintertemperatur und Sinterhaltezeit kann durch Sintern des oben für die Bestimmung der Pressfestigkeit beschriebenen Presskörpers bestimmt werden. Die Sintertemperatur und -zeit wird vorzugsweise so gewählt, dass dieser Presskörper der Belastung durch eine Auflage von 8 bis 18 kg standhält.

Die Bestimmung von Reststrom und Kapazität im Rahmen der vorliegenden Offenbarung wurden wie folgt durchgeführt:

Die gesinterten Anodenstrukturen wurden in einem wässrigen Elektrolyten aus 0,1 gew.-%iger H₃PO₄ bei 85°C und einem Formierstrom von 150 mA/g bis zu einer Formierspannung von 30 V und über eine Ausformierzeit (fast stromlos) über 120 Minuten formiert.

Die Messung von Kapazität und Reststrom erfolgte durch Eintauchen der Kondensatoren in einen wässrigen Elektrolyten aus 18 gew.-%iger H₂SO₄ bei einer Temperatur von 25°C und einer von einer Biasspannung von 10 V überlagerten Wechselspannung von 70% der Formierspannung (21 V) und 120 Hz nach einer Ladezeit von 3 Minuten.

Die Herstellung der erfindungsgemäßen Pulver kann nach üblichen Verfahren erfolgen. Bevorzugt ist das übliche metallurgische Reaktions- und Legierungsverfahren nach dem wie im vorliegenden Fall ein mittlerer Oxidgehalt dadurch eingestellt wird, dass ein hochoxidierter Vorläufer und ein nichtoxidierter Vorläufer in einer nicht oxidierenden, vorzugsweise reduzierenden, Atmosphäre einer Temperatur ausgesetzt werden, in der ein Sauerstoffkonzentrationsausgleich stattfindet. Andere als dieses Festkörperdiffusionsverfahren sind zwar denkbar, sie setzen aber technisch mit vertretbarem Aufwand kaum lösbare Steuerungs- und Kontrollfunktionen voraus. Erfindungsgemäß bevorzugt ist es daher, ein mit hoher Reinheit kommerziell verfügbares Niobpentoxid einzusetzen und dieses mit hochreinem Niobmetall, beides in Pulverform, entsprechend der Stöchiometrie zu vermischen und einer Temperatur von 800 bis 1600°C in einer H₂-Atmosphäre, über mehrere Stunden zu behandeln. Vorzugsweise weisen sowohl das Pentoxid als auch das Metall Primärteilchengrößen auf, die nach dem Sauerstoffausgleich der gewünschten Primärteilchengröße von unterhalb oder leicht oberhalb 1 μm (geringster) Querschnittabmessung entspricht.

Erfindungsgemäß bevorzugt ist die Dotierung mit Magnesium, Molybdän und/oder Wolfram spätestens vor oder während, besonders bevorzugt vor dem Sauerstoffaustausch zwischen der Oxid- und der Metallkomponente.

Zur Vermeidung von Kontaminationen werden bevorzugt alle Reaktoren und Behälter wie Tiegel, Schiffchen, Roste, Netze, usw., die mit Niob oder Nioboxiden bei erhöhter Temperatur in Berührung kommen, vorzugsweise aus Niob oder Tantal ausgeführt oder ausgekleidet.

Das für den Sauerstoffaustausch mit Niobpentoxid erforderliche Niobmetall wird vorzugsweise durch Reduktion von hochreinem Niobpentoxid zum Metall hergestellt. Dies kann aluminothermisch durch Zünden eines Nb₂O₅/Al-Gemisches und Auswaschen des gebildeten Aluminiumoxides und anschließendes Aufreinigen der Niobmetallbarren mittels Elektronenstrahlen erfolgen. Der nach Reduktion und Elektronenstrahlschmelzen erhaltene Niobmetallbarren kann in an sich bekannter Weise mit Wasserstoff versprödet und gemahlen werden, wobei plättchenförmige Pulver erhalten werden. Die Dotierung erfolgt in diesem Falle vorteilhaft durch Zugabe der Dotierungsmetalle in die Schmelze.

Das bevorzugte Verfahren zur Herstellung des Niobmetalls folgt der Offenbarung der WO 00/67936 A1. Nach diesem bevorzugten 2-Stufen-Verfahren wird das hochreine Niobpentoxidpulver zunächst mittels Wasserstoff bei 1000 bis 1600°C, bevorzugt bis 1400°C, zum Niobdioxid etwa der Formel NbO₂, reduziert und anschließend mit Magnesiumdampf bei 900 bis 1100°C zum Metall reduziert. Dabei entstehendes Magnesiumoxid wird mittels Säuren ausgewaschen. Für eine erfindungsgemäß ausreichende Magnesiumdotierung ist es im allgemeinen ausreichend gegenüber der Lehre der WO 00/67936 A1, den letzten Gang der Säurewaschung auszulassen. Bevorzugt ist allerdings die Zugabe von vorzugsweise MgO zur Metall- und/oder Oxidkomponente vor der Sauerstoffaustauschreaktion. Für die Molybdän- und/bzw. Wolframdotierung kann vorteilhaft vor der Reduktion des Pentoxides zum Metall eine Tränkung in Molybdän- und/oder Wolframsäurelösung durchgeführt werden. Weitere Dotiermöglichkeiten sind dem Fachmann ohne weiteres geläufig. Beispielsweise können $MoO_3$ bzw. $WO_3$-Pulver dem Niobpentoxidpulver oder Niobdioxidpulver zugesetzt werden. Besonders bevorzugt erfolgt die Dotierung sowohl mit Mg, als auch mit Mo/W, oder die bevorzugte gemischte Dotierung mit sowohl Mg als auch Mo und/oder W, wobei Mo gegenüber W bevorzugt ist, bereits bei der Herstellung des Niobpentoxides, beispielsweise durch Zugabe der entsprechenden Dotiermittel, bevorzugt der Oxide, zum Nb $(OH)_5$, das in an sich bekannter Weise durch Erhitzen in Niobpentoxid überführt wird.

**Beispiele 1 bis 9:**

Ausgangsmaterial ist ein durch Glühen eines Niobhydroxids, das durch Fällung aus einer $H_2NbF_7$-Lösung mittels wässriger Ammoniaklösung gewonnen wurde, hergestelltes Niobpentoxidpulver. Die chemische Analyse ergab folgendes:

| | | | |
|---|---|---|---|
| Al | < 1 ppm | As | < 1 ppm |
| Ca | < 1 ppm | Cl | < 3 ppm |
| Co | < 0,1 ppm | Cr | < 0,3 ppm |
| Cu | 0,4 ppm | F | 51 ppm |
| Fe | < 1 ppm | K | < 0,5 ppm |
| Mg | < 1 ppm | Mo | < 0,3 ppm |
| Na | 2 ppm | Ni | < 0,2 ppm |
| Si | 8 ppm | Ta | < 10 ppm |
| Ti | < 1 ppm | V | < 1 ppm |
| W | < 0,5 ppm | Zr | < 0,5 ppm. |

Im Falle der Angabe "<" bei den Analysenwerten, charakterisiert die Konzentrationsangabe jeweils die Nachweisgrenze der Analysenmethode bzw. ist der Gehalt aufgrund der Analysengenauigkeit als unterhalb der Nachweisgrenze zu charakterisieren.

Die Pulveragglomerate bestanden aus sehr gleichmäßigen versinterten sphärischen Primärteilchen mit einem mittleren Durchmesser von 0,6 $\mu$m.

Die spezifische Oberfläche nach BET betrug 2,4 $m^2$/g. 97,5 Gew.-% der Agglomerate waren kleiner als 300 $\mu$m (Siebanalyse).

Je eine Menge des Pulver wurde mit den in der folgenden Tabelle 1 angegebenen Menge (ppm) Mg, Mo und/oder W durch Zugabe von MgO-Pulver, $MoO_3$-Pul-

ver und/oder $WO_3$-Pulver und erneutem Glühen unter Luft dotiert.

Tabelle 1:

| Beispiel | Mg | Mo | W |
|---|---|---|---|
| | ppm | ppm | ppm |
| 1 (Vgl.) | - | - | - |
| 2 | 250 | - | - |
| 3 | - | 200 | - |
| 4 | - | - | 220 |
| 5 | 200 | 150 | - |
| 6 | 180 | 170 | - |
| 7 | 170 | 60 | 60 |
| 8 | 100 | 30 | - |
| 9 | 200 | 50 | - |

Ein Teil jedes der Pulver 1 bis 9 wurde zunächst durch Glühen bei 1380°C unter Wasserstoff zum $NbO_2$ reduziert. Anschließend wurde das $NbO_2$ auf eine Netz aus Niobdraht gelegt, unter dem sich in einem Behälter aus Niobmetall die etwa 1,4-fach stöchiometrische Menge Magnesiumspäne bezogen auf den Sauerstoffgehalt des $NbO_2$ befanden. Dann wurde unter Argonatmosphäre bei einem Druck von etwa 1050 mbar auf 970 °C erhitzt. Nach 6 Stunden wurde jeweils langsam abgekühlt und zur Passivierung allmählich belüftet.

Nach Siebung durch ein Sieb von 300 $\mu$m Maschenweite wurde das Pulver zur Entfernung das gebildete MgO mehrfach mit 8 gew.-%iger Schwefelsäure ausgelaugt und gewaschen und getrocknet.

Die Oberfläche der Metallpulver war stark aufgeraut. Die spezifische Oberfläche betrug je nach Batch 4,5 bis 5 $m^2$/g bei nur geringfügig verringerter Primärstrukturabmessung von 0,45 bis 0,55 $\mu$m.

Jedes der Metallpulver wurde im molaren Verhältnis 3:1 mit dem Ausgangs-Niobpentoxid in einer solchen Menge gemischt, dass die mittlere Zusammensetzung der Mischung formal der Formel NbO entsprach. Die Mischungen wurden jeweils in Wasserstoffatmosphäre bei 1050 mbar für 4 Stunden langsam auf 1400°C erhitzt, langsam abgekühlt und passiviert.

Das erhaltene NbO hatte die Gehalte an Dotierelementen gemäß Tabelle 2.

Der im Rasterelektronenmikroskop bestimmte Primärteilchendurchmesser betrug 0,5 bis 0,65 $\mu$m. Der D10-Wert lag bei 50 bis 70 $\mu$m, der D50-Wert bei 170 bis 190 $\mu$m und der D90-Wert bei 270 bis 295 $\mu$m. Die spezifische Oberfläche lag zwischen 1 und 1,15 $m^2$/g.

Tabelle 2:

| Beispiel | Mg | Mo | W |
|---|---|---|---|
| | ppm | ppm | ppm |
| 1 (Vgl.) | 80 | - | - |
| 2 | 350 | - | - |
| 3 | 84 | 262 | - |
| 4 | 82 | - | 289 |
| 5 | 303 | 187 | - |
| 6 | 310 | 205 | - |
| 7 | 294 | 74 | 69 |
| 8 | 178 | 53 | - |
| 9 | 366 | 81 | - |

(fortgesetzt)

| Beispiel | Spez. Kapazität | Spez. Reststrom |
|---|---|---|
| | μFV/g | nA/μFV |
| 3 | 71925 | 0,12 |
| 4 | 68569 | 0,14 |
| 5 | 71896 | 0,03 |
| 6 | 72371 | 0,02 |
| 7 | 70478 | 0,05 |
| 8 | 77746 | 0,11 |
| 9 | 79112 | 0,04 |

Die weiteren Verunreinigungen waren weitgehend unverändert. Die Gehalte an schädlichen Verunreinigungen betrugen:

| | | | |
|---|---|---|---|
| C | 24 ppm | Cl | < 1 ppm |
| Cr | 2 ppm | Cu | 0,4 ppm |
| F | 2 ppm | Fe | 6 ppm |
| K | < 1 ppm | Na | 2 ppm |
| Ni | 2 ppm | | |

Aus den Pulvern wurden Anoden vom Durchmesser 3,6 mm und einer Länge von ebenfalls 3,6 mm um einen in die Pressform eingelegten Tantaldraht von 0,3 mm Dicke mit einer Pressdichte von 2,8 g/cm$^3$ gepresst und anschließend im Hochvakuum bei 1460°C über 20 Minuten gesintert.

Die Anoden wurden in einem Elektrolyten aus 0,1 gew.-%iger Phosphorsäure bei einer Temperatur von 85°C und bei einem Formierstrom von 150 mA/g bis zu einer Formierspannung von 30 V, die nach Stromabfall noch 2 Stunden gehalten wurde, formiert.

An den durch die Formierung mit einer Sperrschicht aus Niobpentoxid versehenen Anodenkörpern wurden Kapazität und Reststrom gemessen, indem die Gegenelektrode durch eine 18 gew.-%ige Schwefelsäure bei 25°C simuliert wurde. Es wurde bei einer Spannung von 21 V (70% der Formierspannung), einer Frequenz von 120 Hz und einer Biasspannung von 10 V nach einer Ladezeit von 3 Minuten gemessen. Die Messergebnisse sind in Tabelle 3 dargestellt.

Tabelle 3:

| Beispiel | Spez. Kapazität | Spez. Reststrom |
|---|---|---|
| | μFV/g | nA/μFV |
| 1 (Vgl.) | 70846 | 2,3 |
| 2 | 72483 | 0,08 |

**Patentansprüche**

1. Niobsuboxidpulver enthaltend 100 bis 600 ppm Magnesium

2. Niobsuboxidpulver enthaltend 50 bis 400 ppm Molybdän und /oder Wolfram.

3. Niobsuboxidpulver enthaltend 100 bis 600 ppm Magnesium und 50 bis 400 ppm Molybdän und/oder Wolfram.

4. Niobsuboxidpulver nach einem der Ansprüche 1 bis 3, wobei der Magnesiumgehalt 150 bis 400 ppm beträgt.

5. Niobsuboxidpulver nach einem der Ansprüche 1 bis 4, wobei der Molybdängehalt 60 bis 250 ppm beträgt.

6. Niobsuboxidpulver nach einem der Ansprüche 1 bis 5, wobei die Gehalte an Fe, Cr, Ni, Cu, Alkalimetalle, sowie Fluorid und Chlorid jeweils weniger als 15 ppm beträgt.

7. Niobsuboxidpulver nach Anspruch 6, wobei die Summe der Gehalte an Fe, Cr, Ni, Cu, Alkalimetalle, sowie Fluorid und Chlorid weniger als 35 ppm beträgt.

8. Niobsuboxidpulver nach einem der Ansprüche 1 bis 7 mit einem Gehalt an Kohlenstoff von weniger als 40 ppm.

9. Niobsuboxidpulver nach einem der Ansprüche 1 bis 7 mit einem Gehalt an Stickstoff von 10 bis 500 ppm.

10. Niobsuboxidpulver nach einem der Ansprüche 1 bis 9 der mittleren Zusammensetzung NbO$_x$ mit 0,7<x<1,3.

11. Niobsuboxidpulver nach einem der Ansprüche 1 bis 10 bestehend aus agglomerierten Primärteilchen mit einem Durchmesser von 0,3 bis 1,5 μm.

**12.** Niobsuboxidanode bestehend aus gesintertem Pulver nach einem der Ansprüche 1 bis 11.

**13.** Festelektrolytkondensator enthaltend eine Niobsuboxidanode nach Anspruch 12 und eine Niobpentoxidsperrschicht.

## Claims

**1.** Niobium suboxide powder containing 100 to 600 ppm of magnesium.

**2.** Niobium suboxide powder containing 50 to 400 ppm of molybdenum and/or tungsten.

**3.** Niobium suboxide powder containing 100 to 600 ppm of magnesium and 50 to 400 ppm of molybdenum and/or tungsten.

**4.** Niobium suboxide powder according to any of Claims 1 to 3, in which the magnesium content is 150 to 400 ppm.

**5.** Niobium suboxide powder according to any of Claims 1 to 4, in which the molybdenum content is 60 to 250 ppm.

**6.** Niobium suboxide powder according to any of Claims 1 to 5, in which the levels of Fe, Cr, Ni, Cu, alkali metals and fluoride and chloride are in each case less than 15 ppm.

**7.** Niobium suboxide powder according to Claim 6, in which the sum of the Fe, Cr, Ni, Cu, alkali metals and fluoride and chloride amounts to less than 35 ppm.

**8.** Niobium suboxide powder according to any of Claims 1 to 7 with a carbon content of less than 40 ppm.

**9.** Niobium suboxide powder according to any of Claims 1 to 7 with a nitrogen content of 10 to 500 ppm.

**10.** Niobium suboxide powder according to any of Claims 1 to 9 with a mean composition $NbO_x$ where $0.7 < x < 1.3$.

**11.** Niobium suboxide powder according to any of Claims 1 to 10 comprising agglomerated primary particles with a diameter of from 0.3 to 1.5 μm.

**12.** Niobium suboxide anode consisting of sintered powder according to any of Claims 1 to 11.

**13.** Solid electrolyte capacitor which includes a niobium suboxide anode according to Claim 12 and a niobium pentoxide barrier layer.

## Revendications

**1.** Poudre de sous-oxyde de niobium contenant 100 à 600 ppm de magnésium.

**2.** Poudre de sous-oxyde de niobium contenant 50 à 400 ppm de molybdène et/ou de tungstène.

**3.** Poudre de sous-oxyde de niobium contenant 100 à 600 ppm de magnésium et 50 à 400 ppm de molybdène et/ou de tungstène.

**4.** Poudre de sous-oxyde de niobium selon l'une quelconque des revendications 1 à 3, où la teneur en magnésium est de 150 à 400 ppm.

**5.** Poudre de sous-oxyde de niobium selon l'une quelconque des revendications 1 à 4, où la teneur en molybdène est de 60 à 250 ppm.

**6.** Poudre de sous-oxyde de niobium selon l'une quelconque des revendications 1 à 5, où la teneur en Fe, en Cr, en Ni, en Cu, en métaux alcalins, ainsi qu'en fluorure et en chlorure est à chaque fois inférieure à 15 ppm.

**7.** Poudre de sous-oxyde de niobium selon la revendication 6, où la somme des teneurs en Fe, en Cr, en Ni, en Cu, en métaux alcalins, ainsi qu'en fluorure et en chlorure est inférieure à 35 ppm.

**8.** Poudre de sous-oxyde de niobium selon l'une quelconque des revendications 1 à 7 présentant une teneur en carbone inférieure à 40 ppm.

**9.** Poudre de sous-oxyde de niobium selon l'une quelconque des revendications 1 à 7 présentant une teneur en azote de 10 à 500 ppm.

**10.** Poudre de sous-oxyde de niobium selon l'une quelconque des revendications 1 à 9 présentant une composition moyenne $NbO_x$ avec $0,7 < x < 1,3$.

**11.** Poudre de sous-oxyde de niobium selon l'une quelconque des revendications 1 à 10 constituée par des particules primaires agglomérées avec un diamètre de 0,3 à 1,5 μm.

**12.** Anode en sous-oxyde de niobium constituée de poudre frittée selon l'une quelconque des revendications 1 à 11.

**13.** Condensateur électrolytique solide contenant une anode en sous-oxyde de niobium selon la revendication 12 et une couche de blocage en pentoxyde de niobium.

# Fig. 1

00059683  ⊢——·10μm  HCST

00059684  ⊢——·3μm  HCST

# Fig. 2

Logarithmus der differentiellen Intrusion
versus Porengröße

—— Intrusion für Zyklus 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1388870 A1
- WO 0067936 A1